# EUROPÄISCHE PATENTANMELDUNG

(11) **EP 2 549 243 A2**
(43) Veröffentlichungstag der Anmeldung: **23.01.2013**
(21) Anmeldenummer: 12176326.2
(22) Anmeldetag: 13.07.2012
(51) Int. Cl.: G01D 11/24

(54) **Linearweg- und Drehwinkelsensorsysteme in Leadframe-Ausführung**

(30) Priorität: 14.07.2011 DE 102011107727
(71) Anmelder: Hirschmann Automotive GmbH, 6830 Rankweil-Brederis (AT)
(72) Erfinder: Die Erfindernennung liegt noch nicht vor
(74) Vertreter: Greif, Thomas

(57) **Zusammenfassung**

Sensorsystem mit einem Magnet, wobei der Magnet mit einem Sensorchip (4) zusammenwirkt, und das Sensorsystem ein Sensorgehäuse (5) aufweist, wobei der Sensorchip (4) in dem Sensorgehäuse (5) angeordnet ist, dadurch gekennzeichnet, dass eine in dem Sensorgehäuse (5) angeordnete Steckerbaugruppe (1) vorgesehen ist, wobei die Steckerbaugruppe (1) elektrische Leiter (2) aufweist, die einerseits Kontaktpartner bilden und andererseits direkt elektrisch mit dem Sensorchip (4) kontaktiert sind.

## Beschreibung

Die Erfindung betrifft ein Sensorsystem mit einem Magnet, wobei der Magnet mit einem Sensorchip zusammenwirkt und das Sensorsystem ein Sensorgehäuse aufweist, wobei der Sensorchip in dem Sensorgehäuse angeordnet ist, gemäß den Merkmalen des Oberbegriffes des Patentanspruches 1.

Solche Sensorsysteme, insbesondere Linearweg- und Drehwinkelsensorsysteme, basieren auf Magnetfeldsensoren, die einen Magneten aufweisen, der mit einem Sensorchip zusammenwirkt. Derartige Systeme besitzen einen Schaltungsträger mit einem oder mehreren Sensorchips und peripheren Zusatzkomponenten, wobei der Sensorchip mittels form-, kraft- oder stoffschlüssigen Verbindungen mit den im Stecker angeordneten Stiften verknüpft ist. Das heißt, dass die Sensorsignale ausgangsseitig den Sensorchip verlassen, wobei die elektrischen Ausgangsanschlüsse des Sensorchips mit elektrischen Leitern verbunden sind, wobei diese elektrischen Leiter an davon separate Kontaktpartner weitergegeben werden, wobei diese Kontaktpartner in einem Stecker angeordnet sind. Infolge dieser Bauweise ist es nötig, die ausgangsseitigen elektrischen Anschlüsse des Sensorchips mit elektrischen Leitern zu verbinden, wobei diese elektrischen Leiter wiederum mit den Kontaktpartnern des Steckers verbunden werden müssen. Daraus resultiert eine hohe Anzahl von Bauteilen und vor allen Dingen in nachteiliger Weise sind mehrere Kontaktstellen erforderlich, um die Anschlüsse des Sensorchips mit den Kontaktpartnern des Steckers zu verbinden. Hier besteht insbesondere bei der Serienherstellung solcher Sensorsysteme die Gefahr, dass eine der Kontaktstellen nicht oder nicht vollständig miteinander verbunden wird, sodass es zu Fehlfunktionen oder sogar zu keiner Funktion des Sensorsystemes kommen kann.

Der Erfindung liegt daher die Aufgabe zugrunde, ein derartiges Sensorsystem mit einem Magnetfeldsensor, umfassend einen Magneten und einen Sensorchip, weiter zu verbessern.

Diese Aufgabe ist durch die Merkmale des Patentanspruches 1 gelöst.

Erfindungsgemäß ist eine in dem Sensorgehäuse angeordnete Steckerbaugruppe vorgesehen, wobei die Steckerbaugruppe elektrische Leiter aufweist, die einerseits Kontaktpartner bilden und andererseits direkt elektrisch mit dem Sensorchip kontaktiert sind. Dies hat den Vorteil, dass zusätzliche elektrische Leiter zwischen dem Kontaktpartner des Steckers und den Anschlüssen des Sensorelementes entfallen können, weil jetzt die Anschlüsse des Sensorchips direkt elektrisch mit den Kontaktpartnern des Steckers verbunden sind. Dies geschieht in an sich bekannter Weise, wie zum Beispiel durch Verlöten, Verstemmen, Verschweißen, Vercrimpen oder dergleichen. Somit kann auch in vorteilhafter Weise ein Schaltungsträger für den Sensorchip entfallen, sodass dadurch die Teileanzahl verringert wird, die Funktionalität verbessert und die Produktionszeit verkürzt wird. Die erfindungsgemäße Aufbau- und Verbindungstechnik schafft darüber hinaus in vorteilhafter Weise gestalterischen Spielraum und erzeugt somit Flexibilität hinsichtlich der Geometrie des Sensorsystemes und vereinfacht weiterhin den Montageaufwand durch Reduktion der Schnittstellenanzahl zwischen Stecker und Sensorchip. Außerdem wird insgesamt die Produktqualität verbessert und die Herstellkosten gesenkt.

In Weiterbildung der Erfindung ist die Steckerbaugruppe ein Kunststoffspritzgussteil, in dem die elektrischen Leiter bereichsweise ortsfest integriert sind. Damit lässt sich die Steckerbaugruppe mit der erforderlichen Geometrie schnell und einfach in einem Kunststoffspritzgussverfahren herstellen. Dabei werden die elektrischen Leiter in die entsprechend gestaltete Spritzgussform eingelegt und fixiert und anschließend bereichsweise umspritzt oder bei Herstellung mittels eines Giessverfahrens umgossen. Das bedeutet, dass die Bereiche der elektrischen Leiter, die später die Kontaktpartner bzw. die Kontaktstelle zu den Anschlüssen des Sensorchips bilden, nicht mit Kunststoffmaterial umspritzt oder umgossen werden.

In Weiterbildung der Erfindung sind das Sensorgehäuse und die Steckerbaugruppe von einander separate Bauteile, sodass nach deren Herstellung die Steckerbaugruppe in das Sensorgehäuse eingesetzt werden kann. Dadurch ist ein hoher gestalterischer Spielraum gegeben, da es nur erforderlich ist, die Konturen des Sensorgehäuses und der Steckerbaugruppe, über die diese beiden Bauteile miteinander in Verbindung gebracht werden, aufeinander abzustimmen. Die übrigen Geometrien der Steckerbaugruppe, insbesondere deren Steckbereich, und des Sensorgehäuses sind frei wählbar. So kann beispielsweise eine Standard-Steckerbaugruppe für unterschiedlich gestaltete Sensorgehäuse (oder umgekehrt) realisiert werden.

In Weiterbildung der Erfindung sind das Sensorgehäuse und/oder die Steckerbaugruppe derart gestaltet, dass eine Öffnung für die Zugänglichkeit zu der Kontaktstelle zwischen dem zumindest einem elektrischen Leiter und dem Sensorchip, genauer dessen korrespondierendem Anschluss, gebildet ist. Damit ist es möglich, dass zum Beispiel der Sensorchip zunächst in der Steckerbaugruppe oder dem Sensorgehäuse angeordnet wird und anschließend die Steckerbaugruppe in das Sensorgehäuse eingesetzt wird. Danach ist es möglich, dass die Kontaktstelle zwischen dem einen elektrischen Leiter und dem Anschluss des Sensorchips zugänglich ist, wozu von dem Sensorgehäuse und/oder der Steckerbaugruppe eine Öffnung gebildet ist. Über diese Öffnung ist es möglich, die elektrischen Leiter, die bereichsweise ortsfest in der Steckerbaugruppe integriert sind, mit den Anschlüssen des Sensorchips zu verbinden. An Stelle dieser Ausführung ist es aber auch denkbar, dass keine Öffnung vorhanden ist, sodass es erforderlich ist, die Anschlüsse des Sensorchips schon vorher mit den elektrischen Leitern der Steckerbaugruppe zu verwenden. Insbesondere ist es von Vorteil, wenn die Anschlüsse des Sensorchips mit den elektrischen Leitern verbunden sind, bevor diese Einheit mit Kunststoffmaterial umspritzt wird.

In Weiterbildung der Erfindung ist vorgesehen, dass die Öffnung (nachdem die Kontaktierung der elektrischen Leiter mit den Anschlüssen des Sensorchips stattgefunden hat) verschlossen ist. In einer weiteren Ausgestaltung der Erfindung ist die Öffnung von einer Vergussmasse verschlossen. Dies hat den Vorteil, dass damit das fertige Sensorsystem, nachdem die Steckerbaugruppe in das Sensorgehäuse eingesetzt worden ist, vollständig gegenüber der Außenumgebung des Einbauraumes, in dem das Sensorsystem eingebaut wird, abgedichtet ist.

In Weiterbildung der Erfindung ist der Sensorchip als Leadframe-Baustein ausgebildet. Dies hat den Vorteil, dass kein Schaltungsträger für einen Magnetfeldsensor vorgesehen werden muss, sondern dass dieser Leadframe-Baustein mit seinen Anschlüssen direkt mit den elektrischen Leitern der Steckerbaugruppe kontaktiert werden kann. Anstelle dessen kann dennoch ein Schaltungsträger vorhanden sein, beispielsweise in Form einer Platine. Der Sensorchip ist dann auf der Platine angeordnet und ggfs. mit weiteren elektronischen Bauteilen verschaltet. Über Anschlusspunkte auf der Platine sind dann die elektrischen Leiter der Steckerbaugruppe und Leiterbahnen auf der Platine mit dem Sensor kontaktiert.

Die beschriebenen Vorzüge eines Sensorsystemes mit einem Sensorchip (Sensorelement) in Leadframe-Technologie verdeutlicht beispielhaft der Linearwegsensor in einer Druckdose in den Figuren.

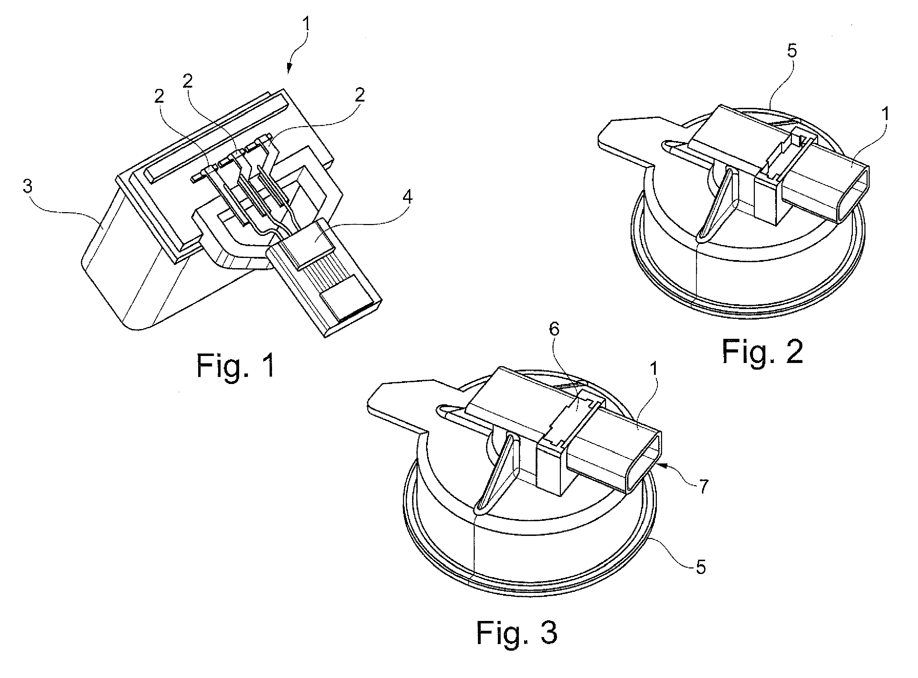

In den Figuren 1 bis 3 ist, soweit im Einzelnen dargestellt, eine Steckerbaugruppe 1 gezeigt. Diese Steckerbaugruppe 1 umfasst zumindest einen oder mehrere elektrische Leiter 2, wobei in dem Ausführungsbeispiel gemäß Figur 1 drei elektrische Leiter 2 dargestellt sind. Diese elektrischen Leiter 2 sind bereichsweise ortsfest in einem Gehäuse 3 der Steckerbaugruppe 1 integriert. Das bedeutet, dass ein Teil der elektrischen Leiter 2, hier beispielsweise etwa der mittlere Bereich, in dem Gehäuse 3 ortsfest angeordnet sind. Die ortsfeste Anordnung kann beispielsweise dadurch erfolgen, dass dieser Bereich der elektrischen Leiter 2 von dem Gehäuse 3 umspritzt ist. Alternativ können mit Herstellung des Gehäuses 3 Öffnungen für die elektrischen Leiter 2 vorgesehen werden, in welche die elektrischen Leiter 2 eingesetzt und in ihrer Sollposition fixiert werden. Diese Fixierung kann beispielsweise durch Verrasten, Verstemmen, Verkleben oder dergleichen erfolgen. Die elektrischen Leiter 2 sind in diesem Ausführungsbeispiel abgewinkelt (hier etwa um 90 Grad) ausgeführt, wobei sie auch eine andere geometrische Erstreckung aufweisen können. In besonders vorteilhafter Weise sind die elektrischen Leiter in einem Stanzbiegeverfahren hergestellt. Bei den elektrischen Leitern 2 handelt es sich weiterhin in vorteilhafter Weise ebenfalls um Leadframe-Leiter.

Wie in Figur 1 erkennbar ist, ist ein Sensorchip 4 vorhanden, der in vorteilhafter Wiese als Leadframe-Bauteil ausgestaltet ist. Das bedeutet, dass aus dem Sensorchip 4 Anschlüsse, hier in Form von Anschlussdrähten, herausgeführt sind. Diese Anschlüsse sind in geeigneter Weise mit dem einen Endbereich der elektrischen Leiter 2 kontaktiert. Der andere Endbereich der elektrischen Leiter 2 ist in Figur 1 nicht erkennbar, jedoch sind diese Endbereiche der elektrischen Leiter 2 als Kontaktpartner für einen hier nicht dargestellten Gegensteckverbinder ausgeführt.

In Figur 2 ist erkennbar, dass die vorbereitete Steckerbaugruppe gemäß Figur 1 in ein Sensorgehäuse 5 eingesetzt ist. Das Sensorgehäuse 5 ist geometrisch den Anforderungen des gesamten Sensorsystemes, insbesondere hinsichtlich der Aufnahme der Betriebsparameter und des Einbauraumes, angepasst. Wie erkennbar ist, ist die Steckerbaugruppe 1 (und/oder das Sensorgehäuse 5) so gestaltet, dass eine Öffnung entsteht, über die die Kontaktstelle zwischen den Anschlüssen des Sensorchips 4 und den elektrischen Leitern 2 realisiert ist. Diese Öffnung ist dann vorhanden, wenn nach dem Einsetzen der Steckerbaugruppe 1 in das Sensorgehäuse 5 die Anschlüsse des Sensorchips 4 noch mit den elektrischen Leitern 2 elektrisch kontaktiert werden müssen. Ist jedoch die Steckerbaugruppe 1, wie sie in Figur 1 dargestellt ist, schon entsprechend vorbereitet und sind die Anschlüsse des Sensorchips 4 mit den elektrischen Leitern 2 schon kontaktiert, muss eine solche Öffnung nicht vorhanden sein. Sie kann aber vorhanden sein. Für den Fall, dass eine solche Öffnung vorhanden ist, wird sie nachträglich verschlossen, insbesondere mit einer Vergussmasse 6, wie es in Figur 3 dargestellt ist. Damit ist das gesamte Sensorsystem einschließlich seiner Steckerbaugruppe 1 und dem Sensorgehäuse 5 gegenüber deren Außenumgebung abgedichtet. Mit der Bezugsziffer 7 ist in Figur 3 schließlich noch die Steckerseite der Steckerbaugruppe 1 bezeichnet, wobei auf dieser Steckerseite 7 ein Gegensteckverbinder aufgesteckt werden kann. Damit wird das Sensorsystem mit einer nachgeschalteten elektronischen Einheit verbunden, mit der die Signale, die von dem Sensorchip 4 abgegeben werden, ausgewertet und umgesetzt werden können. Über die elektrischen Leiter kann der Sensor, der auch eine Elektronik (zur Verstärkung, Filterung, Auswertung oder dergleichen der Signale enthalten kann) darüber hinaus mit Energie versorgt.

Der Vollständigkeit halber sei noch erwähnt, dass der Sensorchip 4 als Magnetfeldsensor ausgebildet ist, wobei er mit einem hier nicht dargestellten Magneten zusammenwirkt. Das bedeutet, dass dieser Magnet relativ zu dem Sensorchip 4 durch den Betriebsparameter, der erfasst werden soll, bewegt wird und diese relative veränderbare Position zwischen dem Magneten und dem Sensorchip 4 von letztgenanntem erfasst werden kann. Das bedeutet, dass der Magnet relativ zu dem Sensorchip 4 linear oder in einer drehförmigen Bewegung in Abhängigkeit des Betriebsparameters bewegt werden kann. Bei der genannten Druckdose ist beispielsweise der Magnet an einem Stab eines Ventiles angeordnet, wobei der Stab des Ventiles eine Linearbewegung ausführt und in Abhängigkeit der Linearbewegung einen Durchtrittsquerschnitt für ein Medium (zum Beispiel Luft oder eine Flüssigkeit) verändert. In Abhängigkeit dieser Veränderung, die von einem Aktor bewirkt wird, wird durch die veränderliche Lage des Magneten innerhalb des Sensorgehäuses 5 der veränderte Querschnitt mittels des Sensorchips 4 erfasst und der nachgeschalteten elektronischen Einheit zu Steuerungs- oder Regelungszwecken weitergeleitet.

### Bezugszeichenliste

- 1.: Steckerbaugruppe
- 2.: Elektrische Leiter
- 3.: Gehäuse
- 4.: Sensorchip
- 5.: Sensorgehäuse
- 6.: Vergussmasse
- 7.: Steckerseite

## Patentansprüche

1. Sensorsystem mit einem Magnet, wobei der Magnet mit einem Sensorchip (4) zusammenwirkt, und das Sensorsystem ein Sensorgehäuse (5) aufweist, wobei der Sensorchip (4) in dem Sensorgehäuse (5) angeordnet ist, **dadurch gekennzeichnet, dass** eine in dem Sensorgehäuse (5) angeordnete Steckerbaugruppe (1) vorgesehen ist, wobei die Steckerbaugruppe (1) elektrische Leiter (2) aufweist, die einerseits Kontaktpartner bilden und andererseits direkt elektrisch mit dem Sensorchip (4) kontaktiert sind.

2. Sensorsystem nach Anspruch 1, **dadurch gekennzeichnet, dass** die Steckerbaugruppe (1) ein Kunststoffspritzgussteil ist, in dem die elektrischen Leiter (2) bereichsweise ortsfest integriert sind.

3. Sensorsystem nach Anspruch 1 oder 2, **dadurch gekennzeichnet, dass** Sensorgehäuse (5) und die Steckerbaugruppe (1) voneinander separate Bauteile sind und die Steckerbaugruppe (1) in das Sensorgehäuse (5) eingesetzt ist.

4. Sensorsystem nach einem der vorhergehenden Ansprüche, **dadurch gekennzeichnet, dass** das Sensorgehäuse (5) und/oder die Steckerbaugruppe (1) derart gestaltet sind, dass eine Öffnung für die Zugänglichkeit zu der Kontaktstelle zwischen dem elektrischen Leiter (2) und dem Sensorchip (4) gebildet ist.

5. Sensorsystem nach Anspruch 4, **dadurch gekennzeichnet, dass** die Öffnung verschlossen ist.

6. Sensorsystem nach Anspruch 5, **dadurch gekennzeichnet, dass** die Öffnung von einer Vergussmasse (6) verschlossen ist.

7. Sensorsystem nach einem der vorhergehenden Ansprüche, **dadurch gekennzeichnet, dass** der Sensorchip (4) als Leadframe-Baustein ausgebildet ist.
